Europäisches Patentamt

European Patent Office

Office européen des brevets

(11) Publication number: **0 107 077**
A1

## (12) EUROPEAN PATENT APPLICATION

(21) Application number: **83109590.6**

(22) Date of filing: **27.09.83**

(51) Int. Cl.³: **B 05 C 9/14,** B 29 B 3/02

(30) Priority: **30.09.82 US 430523**

(43) Date of publication of application: **02.05.84**
Bulletin 84/18

(84) Designated Contracting States: **CH DE FR GB LI**

(71) Applicant: **NORDSON CORPORATION, 555 Jackson
Street P. O. Box 151, Amherst Ohio 44001 (US)**

(72) Inventor: **Petrecca, Peter J., 1709 N. Pelham Road, N.E.,
Atlanta Georgia (US)**

(74) Representative: **Eisenführ & Speiser, Martinistrasse 24,
D-2800 Bremen 1 (DE)**

(54) **Apparatus for melting and dispensing thermoplastic material.**

(57) A hot melt adhesive application apparatus (10) includ-
ing a thermally-sensitive electronic control assembly (34).
The electronic control assembly (34) is adequately ther-
mally insulated from heat generated by the melt tank (76).
The electronic control assembly (34) as well as the pneu-
matic control assembly (60) are positionable so as to face
either to the front or to the rear of the apparatus. The ap-
paratus includes a sturdy base (12) by which the apparatus
may be lifted without damage to the enclosure. In addition,
the tank enclosure includes a flow passage for molten hot
melt adhesive that has leaked past the pump shaft to flow
back into the tank (76).

## APPARATUS FOR MELTING AND
## DISPENSING THERMOPLASTIC MATERIAL

### BACKGROUND OF THE INVENTION

The invention relates to an apparatus for melting and dispensing thermoplastic material.

Conventionally, thermoplastic materials, or so called hot melt materials, are used as adhesives or sealants. These materials are characterized by being solid at room temperature and molten at a temperature substantially above room temperature, usually at a temperature on the order of 250° to 450° F. These materials are supplied in the molten state. Once dispensed onto the substrate, the materials are exposed to atmospheric temperature at which these thermoplastic materials set up or solidify very quickly.

Hot melt adhesive applicators have evolved to contain more sophisticated electronic controls that control, for example, the temperature of the hot melt tank and the temperature of the heated hose. Although many advantages are obtained by using electronic controls, the sophisticated electrical components that they contain are effected by heat from the melt tank. Thus, in order to obtain optimum performance from the electronic controls, the temperature of the electrical components must be kept at an appropriate level. It would therefore be desirable to provide an improved apparatus for melting and dispensing thermoplastic materials that utilizes electronic controls whereby the electrical components are thermally insulated so that heat from the melt tank does not adversely effect their performance.

These electronic controls have at times required maintenance. In the past, access to these controls has not always been relatively easy. Thus, it would be desirable to provide an improved apparatus for melting and dispensing thermoplastic material having electronic controls that are relatively easily accessible.

Pneumatic systems in an air-driven hot melt applicator also require maintenance from time to time. As with the electronic controls, the pneumatic system has not always been easily accessible. Thus, it would be desirable to provide an improved apparatus for melting and dispensing thermoplastic material whereby the pneumatic system is easily accessible.

In the past, access to the control knobs of the electronic controllers as well as the pneumatic indicators has been provided at the front of the applicator. In some applications it would be advantageous to provide access via the rear of the applicator to the control knobs and/or the pneumatic indicators. Thus, it would be desirable to provide an improved apparatus for melting and dispensing thermoplastic material that provides selective access (from either the front or the rear of the apparatus) to the control knobs for the electronic controls and/or the pneumatic indicators.

Although hot melt adhesive applicators of the past have been relatively sturdy, they generally operate in a manufacturing facility environment, and therefore, may be sometimes moved without the greatest of care. For example, a hot melt adhesive applicator with an FRP (fiberglass reinforced plastic) enclosure may be lifted by the enclosure. The result being that undesirable stresses are exerted on the enclosure which may damage the enclosure. Thus, it would be desirable to provide an improved apparatus for melting and dispensing thermoplastic material that includes a frame that provides a lifting surface by which the apparatus can be lifted without exerting a damaging force on the FRP enclosure.

Molten hot melt adhesive has on occasion leaked between the wiper seal assembly and pump shaft. In the past, this leakage accumulated on top of the enclosure. It would be desirable to provide an improved apparatus for melting and dispensing thermoplastic material that provides a path for molten hot melt adhesive that leaks past the wiper seal assembly to flow back into the tank.

SUMMARY OF THE INVENTION

It is an object of the invention to provide an improved apparatus for melting and dispensing thermoplastic material.

It is another object of the invention to provide an improved apparatus for melting and dispensing thermoplastic material whereby the electronic controls are thermally insulated so that heat from the melt tank does not adversely effect their performance.

It is another object of the invention to provide an improved apparatus for melting and dispensing thermoplastic material whereby the electronic controls and the pneumatic system in an air-driven applicator are relatively easily accessible. — 4 —

5

It is another object of the invention to provide an improved apparatus for melting and dispensing thermoplastic material whereby selective access from either the front or the rear of the apparatus is provided to the control knobs for the electronic controls and/or the pneumatic indicators.

It is an object of the invention to provide an improved apparatus for melting and dispensing thermoplastic material having a frame providing a lifting area whereby the apparatus can be lifted without exerting undesirable stresses on the enclosure.

It is another object of the invention to provide an improved apparatus for melting and dispensing thermoplastic material that provides a flow path for hot melt adhesive that leaks past the wiper seal assembly to flow back into the tank.

The invention is an apparatus for melting a solid material and transferring the molten material to a heated hose leading to a dispenser. The apparatus comprises an elongated frame having opposite side edges. The tank for melting the material is mounted to the frame adjacent one of the sides. A heater is mounted within the tank and a manifold and pump are mounted to the tank.

An electronic control assembly is mounted to the frame adjacent the other side thereof. The electronic enclosure is detachably mounted to the frame so as to be positioned over the electronic control assembly. The tank enclosure is positioned above the tank.

- 5 -

An insulative air space between the tank and the electronic control assembly is defined by the electronics and tank enclosures. The electronic control assembly is adequately insulated from the heat generated by the tank so that the operation of the control assembly is not impeded.

BRIEF DESCRIPTION OF THE DRAWINGS

Further objects and features of the invention will be apparent from the following description of an embodiment of the invention in connection with the accompanying drawings. It should be understood that this description is in no way limiting and that various changes may be brought to the disclosed embodiment without departing from the scope of the invention.

Fig. 1 is a perspective view of a specific embodiment of the invention;

Fig. 2 is a perspective view of the specific embodiment of Fig. 1 with the electrical control assembly and pneumatic assembly rotated 180°;

Fig. 3 is a perspective view of the embodiment of Fig. 1 with the electronics, and tank enclosures blown apart from the apparatus;

Fig. 4 is a partial cross-sectional view of the embodiment of 1; and

Fig. 5 is a diagrammatic view showing the specific embodiment of Fig. 1 in a system.

7

## DETAILED DESCRIPTION OF THE SPECIFIC EMBODIMENT

Referring to the drawings, there is illustrated a hot melt adhesive applicator generally designated as 10. The applicator 10 includes a base 12 having front member 14, rear member 16, and opposite side members 18 and 20. A peripheral generally horizontally disposed integral flange 22 extends around the edge of base 12. Front member 14 and rear member 16 have access passages 28 and 30, respectively. Base 12 is formed from a sufficiently strong material such as a heavy gage steel or plastic so that the entire apparatus can be lifted at integral flange 22. By lifting the apparatus at the flange potentially damaging stresses are not exerted on the enclosures described hereinafter.

An electronic control assembly generally designated as 34 is affixed to a plate 36. Plate 36 being affixed to portions of the flange 22 adjacent the one side member 18 of base 12. Electronic control assembly 34 includes a control panel 38 affixed to plate 36 at one end thereof and a heat sink 40 affixed to plate 36 at the other end thereof. Control panel 38 includes knobs 42 and indicator lights 43 as well as a hinged cover 44. Hinged cover 44 has a window whereby when cover 44 is closed the operator can still monitor knobs 42 and indicator lights 43. Electronic components generally designated as 49 are mounted, directly or indirectly, to plate 36.

Because the control panel 38, heat sink 40 and electronic components 49 are detachably mounted to plate 36, the electronic control assembly 34 can be rotated 180°. In other words, the control panel 38 can face forward (as illustrated in

- 7 -

8

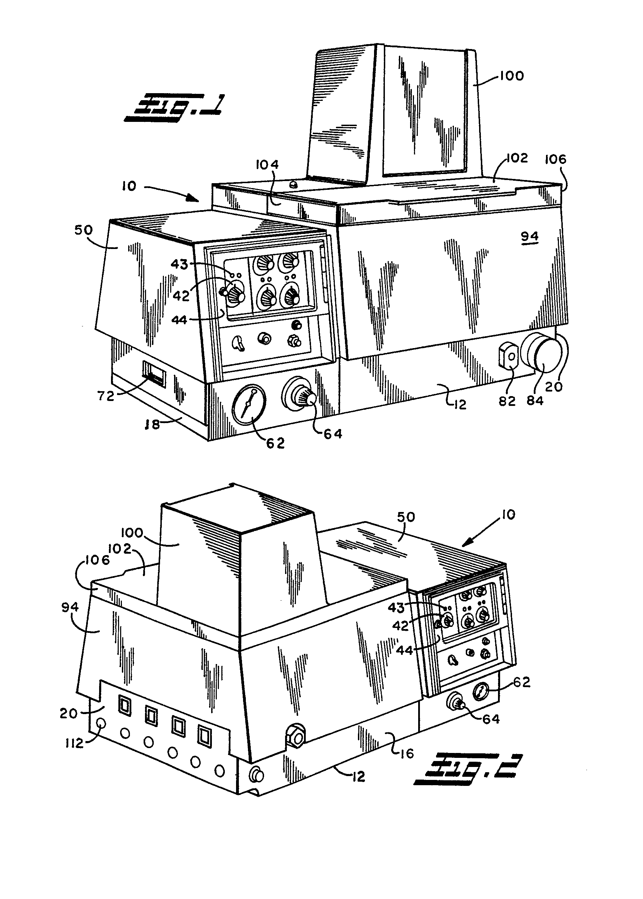

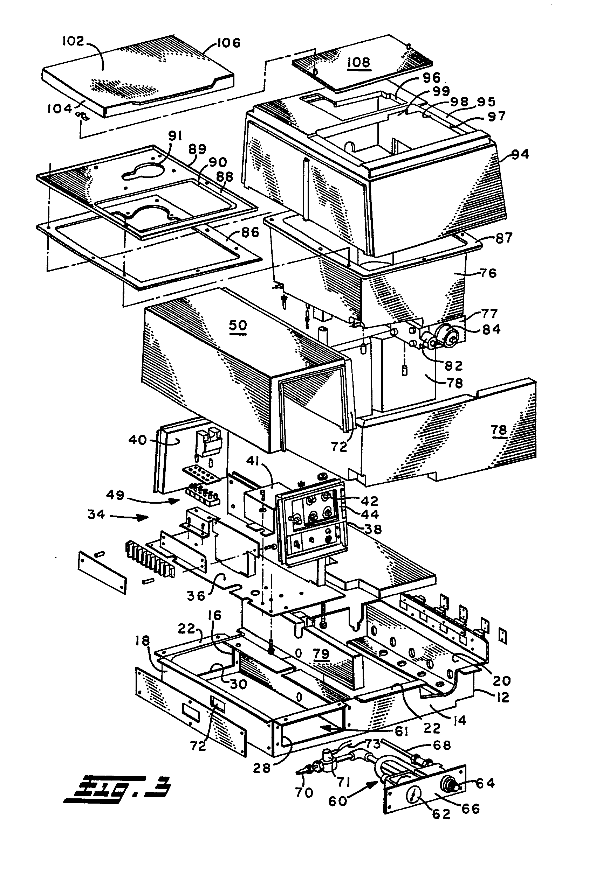

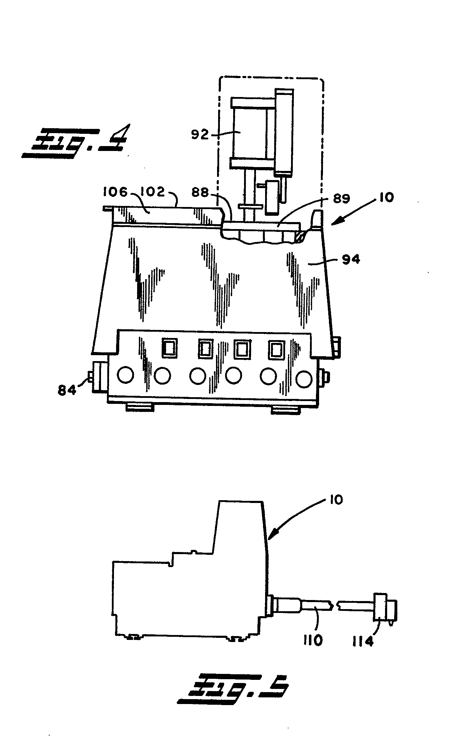

Fig. 1) or rearward (as illustrated in Fig. 2). The capability of rotating the electronic control assembly 34 provides apparatus 10 with a flexibility to accommodate applications in which access to knobs 42 and/or indicator lights 43 by the rear of the apparatus is advantageous.

One feature provided by the electronic control assembly 34 is control over the temperature of the hose. The specific details of the electronics are described in U.S. Patent Application S.N. 301,732 filed on September 14, 1981 for a CONTROL CIRCUIT, and assigned to the assignor of this patent application.

The electronics enclosure 50 is made of an FRP (fiberglass reinforced plastic) material and is detachably mounted to plate 36. Thus, electrical enclosure 50 can be easily removed to provide relatively easy access to electronic control assembly 34. By having this relatively easy access, the maintenance of the components 49 is made easier as is the rotation of the electronic control assembly 34.

A pneumatic assembly 60 is positioned within a pneumatic compartment 61. Pneumatic compartment 61 is defined within base 12. Pneumatic assembly 60 includes a dial indicator 62, a control knob 64, a mounting plate 66, an air line 68 connected to the air motor (that drives the pump), a connector fitting 70, and a solenoid valve 71. Access to connector fitting 70 is provided through an aperture 72 contained in the one side member 18. Solenoid valve 71 is operatively connected to the electronic control assembly 34 by wires 73. Pneumatic assembly 60 is easily accessible since plate 66 can be removed and the assembly 60 slid out through access passage 30.

Like the electronic control assembly 34, pneumatic assembly 60 may be rotated 180° so that dial indicator 62 and control knob 64 either face forward (as in Fig. 1) or rearward (as in Fig. 2). The capability of rotating the pneumatic assembly 60 provides the apparatus with a flexibility to accommodate applications in which access to dial indicator 62 and control knob 64 via the rear of the apparatus is advantageous.

Applicator 10 includes a tank 76 which is mounted to base 12. A manifold 77 is mounted to the bottom of tank 76. An insulation blanket 78 surrounds tank 76 and an insulation block 79 is positioned adjacent the pneumatic assembly 60. There is also an insulative air space between the tank and the electronics as defined by the projection 72 of the electronics enclosure 50. Manifold 77 includes a drain having a drain plug 82 and a filter 84 positioned in a side-by-side relationship.

Although the heater arrangement is not illustrated, tank 76 is a heated tank. Tank 76 is substantially identical to the tank described in U.S. Patent Application Serial No. 301,600 filed on September 14, 1981 for an APPARATUS FOR MELTING AND DISPENSING THERMOPLASTIC MATERIAL assigned to the assignee of this patent application. Thus, descriptions regarding the tank (including the heater arrangement and tank wall configuration) are contained in U.S. Patent Application Serial No. 301,600.

A gasket 86 is sandwiched between the top edge 87 of tank 76 and a tank cover 88. Gasket 86 seals between tank 76 and tank cover 88. Tank cover 88 has an upstanding flange 89 at the perimeter thereof. Tank cover 88 includes a contoured cutout 91 and a rectangular cutout 90. An air motor 92 which drives a pump (not illustrated) is mounted to tank cover 88 so that the motor-pump assembly passes through contoured cutout 91. Rectangular cutout 90 provides access to tank 76 through tank cover 88. The pump is a conventional double acting reciprocating piston pump. A complete description of the air motor and pump is found in U.S. Patent No. 3,585,361 issued on June 15, 1971 for a SUPPLY SYSTEM FOR THERMOPLASTIC MATERIALS assigned to the assignee of this patent application.

The mounting of the pump is described in U.S. Patent Application Serial No. 301,523, filed on September 14, 1981, for an APPARATUS FOR MELTING AND DISPENSING THERMOPLASTIC MATERIAL assigned to the assignee of this patent application.

A tank enclosure 94 is mounted to tank cover 88 and encloses tank 76. Tank enclosure 94 includes a top surface 95 having a contoured opening 96 generally registering with cutout 91 in the tank cover and a rectangular opening 97 generally registering with cutout 90.

Rectangular opening 97 is defined by a depending lip 98. A section of lip 98 adjacent contoured opening 96 is removed to form a passage 99. Passage 99 provides communication between tank 76 and the top surface of cover 88 adjacent the air motor-pump arrangement. A wiper seal (not illustrated) seals at the pump shaft. In the event the wiper seal fails, molten hot melt adhesive may leak past the shaft and accumulate on the top of the tank cover 88. Passage 99 provides the necessary communication that allows the molten adhesive to pass into the tank 76. Thus, adhesive does not accumulate on tank cover 88

11

where it can solidify possibly impeding the operation of the entire apparatus.

A motor enclosure 100 mounts to tank enclosure 94 so as to enclose the air motor-pump arrangement. Motor enclosure 100 is removable so as to provide access to the motor.

A cover 102 having opposite ends 104 and 106 is hingedly connected to tank enclosure 94. Cover 102 can be connected at either its one end 104 or other end 106 so as to open to either the left or the right.

Cover 102 includes a lid 108 that is suspended from the cover by a snap-fit connection. Further details of this connection are disclosed in U.S. Patent Application Serial No. 301,519 filed on September 14, 1981, for an IMPROVED HOUSING FOR APPARATUS FOR MELTING AND DISPENSING THERMOPLASTIC MATERIAL and assigned to the assignee of this patent application.

The operation of the apparatus is described in some detail in the above-mentioned U.S. patent applications (U.S. Serial Nos. 301,732, 301,600, 301,523 and 301,519 [all filed on September 14, 1981]). However, the general operation of the apparatus is described below.

Solid hot melt adhesive is positioned within tank 76 and power is supplied to the tank heaters. The heaters are controlled by the electronics assembly 34. The solid hot melt is heated to become molten.

As can be appreciated heat is generated by the tank. The electronic assembly 34 is adequately insulated so that the electronics are not affected by the heat from the tank. The air space between the assembly 34 and tank 76, insulation blanket 78

12

the FRP wall of tank enclosure 94, the FRP wall of electronic enclosure 72, and insulation block 79 all function to thermally insulate the electronics. In addition, the electronic assembly includes heat sink 40 and insulation cover 41 to reduce heat build up of the electronics.

Molten hot melt adhesive is pumped by the air motor-powered piston pump into the manifold. Molten adhesive flows through the manifold into a heated hose 110. The hose 110 can be connected to any one of a number of outlets 112 from the manifold.

The molten adhesive is carried by hose 110 to a dispenser 114 where it is dispensed.

While one form of the invention has been shown and described, other forms will now be apparent to those skilled in the art. Therefore, it will be understood that the embodiment shown in the drawings and described above are for illustrated purposes and are not intended to limit the scope of the invention which is defined by the following claims.

I CLAIM:

1.    An apparatus for melting a meltable solid material and transferring the molten material to a heated hose leading to a dispenser, the apparatus comprising:

an elongated frame having opposite side edges;

a tank for melting the material mounted to said frame adjacent one of said sides, a heater mounted within said tank, a manifold mounted to said tank, a pump mounted to said tank;

an electronic control assembly mounted to said frame adjacent said other side thereof;

an electronic enclosure detachably mounted to said frame so as to be positioned over said electronic control assembly;

a tank enclosure positioned about said tank; and

an insulative air space between said tank and electronic control assembly defined by said electronic enclosure and tank enclosure so that said electronic control assembly is adequately insulated from the heat generated by said tank so that the operation of said electronic control assembly is not impeded.

14

2.   The apparatus of Claim 1 wherein a layer of insulation is sandwiched between said tank enclosure and said tank.

3.   The apparatus of Claim 1 wherein the heated hose connects to said manifold, and said electronic control assembly including means for controlling the temperature of the hose and means for controlling the operation of the heater.

4.   The apparatus of Claim 1 wherein said frame includes opposed front and rear panels, a pneumatic assembly slideably mounted within said frame, each of said panels having an access opening through which said pneumatic assembly may pass.

5.   The apparatus of Claim 4 wherein said pneumatic assembly includes an operator-monitorable indicator, said pneumatic assembly being selectively positionable between first and second positions wherein said indicator is visible through said first and second panels, respectively.

6.    The apparatus of Claim 1 wherein said electronic control assembly includes operator-manipulatable controls, said electronic control assembly and electronic enclosure being selectively positionable between first and second positions wherein said operator-manipulatable controls are visible from the front and rear of said apparatus, respectively.

7.    The apparatus of Claim 6 wherein said electronic control assembly includes a pivotable cover for protecting selected ones of said controls from splash of the molten material.

8.    The apparatus of Claim 1 wherein said frame includes a flange for lifting the apparatus.

9.    The apparatus of Claim 1 further including a pump enclosure mounted to said tank enclosure so as to enclose a portion of said pump.

10.  An apparatus for melting a meltable solid material and transferring the molten material to a heated hose leading to a dispenser, the apparatus comprising:

a melter tank, said tank being open at the top, a flange surrounding said opening, a tank cover mounted to said flange;

a heater mounted within said tank;

a pump mounted to said tank;

a motor connected to said pump by a shaft; and,

a tank enclosure mounted to said tank, said shaft sealed at said tank enclosure, said enclosure including a passage that provides communication between said pump and said tank enclosure should molten material leak past the seal between said shaft and said tank enclosure.

1/3

FIG.1

FIG.2

FIG.3

Fig.4

92

106  102          88                    89        10

                                                  94

84

10

110    114

Fig.5

0107077

| DOCUMENTS CONSIDERED TO BE RELEVANT | | | EP 83109590.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| P,A | EP - A1 - 0 075 428 (NORDSON) <br> * Claims; fig. 1,5 * <br> -- | 1,10 | B 05 C 9/14 <br> B 29 B 3/02 |
| A | US - A - 3 792 801 (BAKER et al.) <br> * Claims; fig. 4 * <br> -- | 1,10 | |
| A | US - A - 3 876 105 (KELLING) <br> * Claims; fig. 1,2 * <br> ---- | 1,10 | |
| | | | **TECHNICAL FIELDS SEARCHED (Int Cl ³)** <br><br> B 05 C <br> B 05 B <br> B 29 B |

The present search report has been drawn up for all claims

| Place of search | Date of completion of the search | Examiner |
|---|---|---|
| VIENNA | 30-12-1983 | SCHÜTZ |